(19) Europäisches Patentamt
European Patent Office
Office européen des brevets

(11) Numéro de publication : **0 606 174 A1**

(12) **DEMANDE DE BREVET EUROPEEN**

(21) Numéro de dépôt : **94400006.6**

(51) Int. Cl.[5] : **B05D 1/18,** C09D 183/08

(22) Date de dépôt : **03.01.94**

(30) Priorité : **05.01.93 FR 9300020**

(43) Date de publication de la demande : **13.07.94 Bulletin 94/28**

(84) Etats contractants désignés : **BE DE ES FR GB IT NL**

(71) Demandeur : **ELF ATOCHEM S.A.**
**4 & 8, Cours Michelet**
**La Défense 10**
**F-92800 Puteaux (FR)**

(72) Inventeur : **Collette, Christian**
**19 rue Vauquelin**
**F-75005 Paris (FR)**
Inventeur : **Corpart, Jean-Marc**
**60 Allée de Cormeilles**
**F-95110 Sannois (FR)**
Inventeur : **Rondelez, Francis**
**28 Boulevard de la République**
**F-92260 Fontenay-aux-Roses (FR)**
Inventeur : **Brzoska, Jean-Bruno**
**Appt. 36-8 Place du Morvan**
**F-31100 Toulouse (FR)**

(74) Mandataire : **Leboulenger, Jean et al**
**Elf Atochem S.A.**
**Département Propriété Industrielle, Cedex 42 -**
**La Défense 10**
**F-92091 Paris la Défense (FR)**

(54) **Solide muni d'une couche hydrophobe et oléophobe et procédé d'application de ladite couche.**

(57) L'invention est relative à des substrats solides revêtus d'une couche hydrophobe et oléophobe ainsi qu'à leur procédé de préparation.

Le greffage a partir de perfluoroalkylhalogénosilanes ou perfluoroalkylalcoxysilanes est reproductible et de bonne qualité lorsque ledit greffage est réalisé à partir d'une solution diluée, dans un mélange de solvants organiques, maintenue tout au long de la réaction à une température inférieure ou égale à la température critique Tc spécifique de l'organosilane utilisé.

EP 0 606 174 A1

L'invention est relative à des substrats solides revêtus d'une couche hydrophobe et oléophobe ainsi qu'à leur procédé de préparation.

La modification de surfaces solides par le dépôt de couches monomoléculaires est un sujet d'intérêt croissant dans différentes industries. Des traitements rendant hydrophobes ou oléophobes ou isolants différents substrats comme les verres, les céramiques, les métaux ou les métalloïdes présentent de nombreux domaines d'application.

Dans le secteur de l'électronique, il est nécessaire de pouvoir réaliser des couches isolantes électriques ultra-minces. Des traitements anti-givre pour les vitrages, par exemple des véhicules routiers ou des bâtiments, ainsi que des traitements anti-fouling par exemple pour les bateaux, sont recherchés. Un des moyens d'obtenir ce type de modification de surface consiste à greffer chimiquement de longues chaînes hydrocarbonées ou perfluorées sur une surface solide hydratée. Ce greffage est réalisé par réaction de groupements du type halogénosilane et plus particulièrement trichlorosilane, ou alcoxysilane et particulièrement trialcoxysilane. Le terme "silanisation" est couramment employé pour qualifier ce type de traitement de surface. Le principe de la silanisation a été largement décrit dans la littérature et l'on pourra se rapporter aux documents suivants :

- I.M. Tidswell et coll., J; Chem. Phys., 95(4), 2854 (1991)
- R. Maoz et coll., J. Colloid Interface Sci., 100(2), 465 (1991)
- FR 2 635 319
- JP 62153147
- JP 58142958

Une description complète du processus de silanisation est due à J. SAGIV, J. Am. Chem. Soc., 102, (1), 92 (1980).

Les techniques connues mettant en oeuvre les perfluoroalkylhalogénosilanes ou perfluoroalkylalcoxysilanes ne permettent pas d'obtenir de façon reproductible des couches de bonne qualité et présentant une bonne tenue dans le temps et, de plus, nécessitent généralement un traitement thermique avant utilisation (voir à ce propos les documents US 4997684 et JP 58142958).

Il a maintenant été trouvé que le greffage à partir de perfluoroalkylhalogénosilanes ou perfluoroalkylalcoxysilanes était reproductible et de bonne qualité lorsque ledit greffage était réalisé à une température inférieure ou égale à la température critique Tc, spécifique de l'organosilane utilisé.

Ces couches présentent un caractère oléophobe et hydrophobe marqué, lequel résiste bien au temps. Elles sont obtenues par l'application sur une surface dûment nettoyée et hydratée d'une solution organique de l'organosilane que l'on souhaite utiliser pour le greffage sur ladite surface. Ces avantages sont conservés même si le substrat revêtu est utilisé ultérieurement à des températures supérieures à la température critique Tc. Si le greffage est réalisé selon la présente invention, il n'est pas nécessaire de procéder volontairement à un traitement thermique du substrat revêtu avant son utilisation comme le préconise l'art antérieur.

Le présent traitement de silanisation peut être appliqué aux surfaces solides hydratées, et donc aux solides comportant des groupes hydroxyles à leur surface. A titre d'exemple de solides pouvant faire office de substrat, on citera les verres, les céramiques, de préférence les céramiques de type oxyde, les métaux, en particulier l'aluminium, ou les métalloïdes comme le silicium oxydé.

Les organosilanes utilisés dans l'invention présentent la structure

$$\begin{array}{r} R^1\phantom{-R^3} \\ /\phantom{-R^3} \\ CF_3(CF_2)_a\text{-}(CH_2)_b\text{-}Q\text{-}CH_2\text{-}CH_2\text{-}Si\text{-}R^3 \\ \backslash\phantom{-R^3} \\ R^2\phantom{-R^3} \end{array}$$

dans laquelle $R^1$, $R^2$, et $R^3$ sont identiques ou différents et représentent chacun un atome d'halogène, de préférence un atome de chlore, ou un radical alcoxy comprenant un à trois atomes de carbone, de préférence méthoxy ou éthoxy, ou un radical alkyle contenant un ou deux atomes de carbone, l'un au moins des symboles $R^1$, $R^2$, et $R^3$ représentant un atome d'halogène ou un radical alcoxy ;

a est un nombre allant de 1 à 10, de préférence 5 à 9 ;

b est un nombre allant de 0 à 2 ; et

Q représente une liaison directe (autrement dit Q est absent en tant que groupement) ou , à condition que b soit différent de zéro, un groupe de liaison bivalent, comme par exemple un groupe éther, ester, ou thioéther.

La température critique Tc de l'organosilane utilisé est fonction des nombres a et b définis ci-dessus et peut être estimée, en degrés Celsius, par la formule :

$$Tc(°C) = 5 \times (a + 1) + 3{,}5xb - 40$$

La température critique est ainsi approchée à ± 3°C.

Il convient de procéder au greffage à une température inférieure ou égale à la température critique. On pourra se placer de préférence quelques degrés en-dessous de la température critique calculée, par exemple trois degrés en-dessous. La température critique peut être vérifiée expérimentalement. Pour ce faire, on peut mesurer l'influence de la température de greffage sur les propriétés hydrophobes ou oléophobes de la surface. On peut alors vérifier que les propriétés de surface sont meilleures et quasi-indépendantes de la température de greffage si la couche a été greffée à une température inférieure à Tc.

Dans la solution organique utilisée pour le traitement de surface, l'organosilane est introduit de préférence en faible concentration ($1.10^{-4}$ à $1.10^{-2}$ mole/litre) de manière à éviter la formation de micelles. Cette solution comprend également un système solvant organique constitué d'un ou plusieurs solvants hydrocarbonés non polaires comme les n-alcanes et d'un ou plusieurs solvants polaires, par exemple un solvant chloré comme le dichlorométhane, le trichlorométhane, le trichloroéthane, le trichloroéthylène, le trichlorotrifluoroéthane, le tétrachlorure de carbone. Le système solvant comprend de préférence au moins 70% en volume de solvant non polaire et de préférence au moins 5% en volume de solvant polaire. Ces conditions sur les solvants étant remplies, la température critique Tc ne dépend pas de la nature des solvants et est seulement dépendante de la nature de l'organosilane utilisé.

La température minimale d'application du procédé selon l'invention correspond à la température de solidification de la solution de silanisation.

Avant d'appliquer la composition d'organosilane sur le substrat, il convient de nettoyer la surface pour éliminer les contaminants organiques et minéraux et de l'hydrater pour la rendre apte au greffage. Pour le nettoyage, on peut avoir recours à toute méthode appropriée. Sans que cela ne soit limitatif, on peut faire appel aux solvants et/ou à une solution de détergent et/ou à un traitement photochimique à l'ozone. Dans ce dernier cas, la surface à traiter est exposée à des rayonnements ultraviolets dans une atmosphère d'oxygène.

Le nettoyage doit être immédiatement suivi de l'application de la composition d'organosilane à la température souhaitée. On laisse agir la composition un temps suffisant pour que le démouillage du bain se fasse parfaitement, soit quelques minutes, généralement environ 10 minutes.

Selon la sensibilité vis-à-vis de l'humidité des organosilanes utilisés, on prendra les précautions nécessaires à la protection de la solution de silanisation. Par exemple, on pourra la maintenir sous une atmosphère inerte d'azote ou d'argon tout au long du procédé selon l'invention. Par contre, après silanisation, le solide revêtu peut être remis à l'air ambiant car la couche greffée ne craint pas l'humidité.

Le procédé ci-dessus décrit met en oeuvre une réaction d'hydrolyse de l'organosilane et conduit à couvrir la surface du substrat traité par des groupements organosiliciés de formule :

$$CF_3(CF_2)_a\text{-}(CH_2)_b\text{-}Q\text{-}CH_2\text{-}CH_2\text{-}\overset{|}{\underset{|}{Si}}\text{-}$$

les valences non attribuées de l'atome de silicium restant nécessairement liées aux groupements $R^1$, $R^2$ ou $R^3$ précédemment décrits, exclusivement lorsque ceux-ci représentent des groupements alkyle. Lorsque $R^1$, $R^2$ ou $R^3$ représentent des atomes d'halogène ou des radicaux alcoxy, ceux-ci auront en partie réagi avec les groupements hydroxyle du substrat. Au retour du revêtement à l'air ambiant ou dans un milieu hydraté, les liaisons Si-halogène ou Si-alcoxy qui n'auraient pas réagi avec la surface du substrat, réagissent avec des molécules d'eau pour former des liaisons Si-OH. Ces derniers groupements hydroxyles pourront en grande partie condenser, conduisant à des ponts Si-O-Si entre groupements organosiliciés voisins.

Ce procédé conduit donc à :

**a)** lier des groupements organosiliciés de formule :

$$CF_3(CF_2)_a\text{-}(CH_2)_b\text{-}Q\text{-}CH_2\text{-}CH_2\text{-}Si\text{-}$$

à la surface du substrat par l'intermédiaire d'atomes d'oxygène ;

**b)** lier éventuellement lesdits groupements organosiliciés, si ceux-ci comportaient avant réaction plus d'un halogène ou groupe alcoxy, à d'autres groupements siliciés par l'intermédiaire d'atomes d'oxygène ;

**c)** la formation, en faible proportion, de groupes hydroxyles OH liés à l'atome de silicium.

Pour caractériser la surface revêtue, on mesure l'angle de contact du bord d'une goutte d'un liquide donné avec ladite surface. En particulier, la tension critique de surface $\gamma_c$ est déterminée en utilisant une série homologue de n-alcanes et en appliquant la méthode de Zisman (W.A. ZISMAN, Adv. Chem. Series, 43, 1,1964; Ind. Eng. Chem., 55, 19, 1963) qui consiste à porter le cosinus de l'angle de contact $\theta$ de ces liquides en fonction de leur tension de surface $\gamma_{lv}$. L'extrapolation de la droite pour cos $\theta = 1$ fournit $\gamma_c$. Dans tous les cas, c'est l'angle à l'équilibre à 25°C que l'on utilise.

Le caractère oléophobe est d'autant mieux marqué que la tension critique de surface ainsi mesurée est basse. Des valeurs remarquablement basses compte tenu des organosilanes considérés, inférieures à 12 mN/m, sont obtenues grâce au procédé de la présente invention.

Le caractère hydrophobe de la couche obtenue est caractérisé par la mesure de l'angle de contact du bord d'une goutte d'eau avec la couche déposée sur la surface du substrat. En particulier la couche présente un caractère anti-givre lorsque cet angle de contact est supérieur ou égal à 100°. Ces mesures sont réalisées à 25°C.

La tenue dans le temps peut être mise en évidence par des vieillissements accélérés, par exemple en plongeant le substrat revêtu dans l'eau bouillante. On observe alors l'influence dudit vieillissement sur les propriétés hydrophobes ou oléophobes du revêtement.

Les exemples suivants illustrent l'invention sans la limiter.

## EXEMPLE 1

On utilise comme substrat une lame de verre pour microscope. La surface de la lame est nettoyée selon la procédure suivante :

**1.** dégraissage par le chloroforme pendant quelques minutes

**2.** immersion dans une solution contenant 50% en volume d'acide chlorhydrique (concentré à 37% en volume) et 50% en volume d'éthanol à 95%

**3.** rinçages successifs à l'eau fraîchement distillée

**4.** séchage en étuve à 100°C

Immédiatement après le nettoyage, la lame est trempée pendant 10 minutes dans une solution à $1.10^{-3}$ mole/litre du triéthoxysilane fluoré de formule $C_8F_{17}(CH_2)_2S(CH_2)_2Si(OEt)_3$ dont la température critique est d'environ 8°C. Le système solvant de cette solution est composé de 80% en volume de n-heptane et 20% en volume de tétrachlorure de carbone.

Après réaction, la lame sort de la solution parfaitement sèche. Les mesures de $\gamma_c$ en fonction de la température de greffage sont rassemblées dans le tableau ci-dessous. Les mesures ont été effectuées deux fois.

| Tgreffage (°C) | 0 | 5 | 7 | 10 | 15 | 20 | 25 | 30 |
|---|---|---|---|---|---|---|---|---|
| $\gamma_c$ (mN/m) | 11 | 11 | 11 | 12,2 | 13,5 | 16 | 14,9 | 15,6 |
| | 11 | 10,5 | 11,3 | 11,9 | 13,8 | 15,7 | 16,2 | 15,1 |

Lorsque le greffage est réalisé en-dessous de la température critique, la tension critique de surface est pratiquement indépendante de la température de greffage et est remarquablement basse, puisque inférieure à 12 mN/m.

## EXEMPLE 2

On opère dans des conditions opératoires identiques à celles de l'exemple 1 sauf que l'éthoxysilane de

l'exemple 1 est remplacé, en une concentration identique, par le triméthoxysilane $C_8F_{17}(CH_2)_2S(CH_2)_2Si(OMe)_3$ dont la température critique est d'environ 8°C. Les résultats sont rassemblés dans le tableau ci-dessous.

| Tgreffage (°C) | 0 | 5 | 10 | 15 | 20 |
|---|---|---|---|---|---|
| $\gamma_c$ (mN/m) | 11 | 11 | 12,7 | 14,4 | 15,2 |
| | 11 | 11,3 | 12,6 | 14,3 | 14,9 |

Lorsque le greffage est réalisé en-dessous de la température critique, la tension critique de surface est pratiquement indépendante de la température de greffage et est remarquablement basse, puisque inférieure à 12 mN/m.

## EXEMPLE 3

On utilise comme substrat un disque de silicium, oxydé en surface. La surface comporte les groupes hydroxyles nécessaires à la silanisation. Le disque est nettoyé par la procédure suivante:

**1.** dégraissage par le chloroforme quelques minutes
**2.** traitement photochimique par irradiation UV dans une atmosphère d'oxygène
**3.** oxydation chimique de la surface quelques minutes par immersion dans une solution fraîchement préparée composée de 70% en volume d'acide sulfurique et de 30% en volume de peroxyde d'hydrogène, chauffée à 150°C.
**4.** rinçages successifs à l'eau fraîchement distillée
**5.** séchage en étuve à 100°C
**6.** traitement photochimique comme en 2

Immédiatement après le nettoyage, le disque est trempé pendant 10 minutes dans une solution à $1.10^{-3}$ mole/litre du trichlorosilane fluoré de formule $C_8F_{17}(CH_2)_2SiCl_3$ dont la température critique est d'environ 2°C. Le système solvant de cette solution est composé de 80% en volume de n-octane et 20% en volume de tétrachlorure de carbone.

Les résultats sont rassemblés dans le tableau ci-dessous.

| Tgreffage (°C) | -3 | 0 | 5 | 10 |
|---|---|---|---|---|
| $\gamma_c$ (mN/m) | 10 | 10 | 14 | 15 |

Les greffages réalisés à -3 et 0°C (en-dessous de Tc) ont conduit à des tensions critiques de surface remarquablement basses, c'est à dire inférieures à 12 mN/m.

## EXEMPLE 4

On utilise comme support une plaque d'aluminium. Celle-ci est nettoyée selon la procédure décrite à l'exemple 3, sauf que l'étape 3 est remplacée par une immersion de 5 minutes dans une solution d'acide nitrique fumant à la température ambiante.

Immédiatement après le nettoyage, la plaque est trempée pendant 10 minutes dans une solution à $1.10^{-3}$ mole /litre du trichlorosilane fluoré de formule $C_8F_{17}(CH_2)_2SiCl_3$. Le système solvant de cette solution est composé de 80% en volume de n-octane et 20% en volume de tétrachlorure de carbone.

On obtient des résultats identiques à ceux de l'exemple 3.

## EXEMPLE 5

Deux disques de silicium oxydé greffés l'un à -3, l'autre à 12°C par $C_8F_{17}(CH_2)_2SiCl_3$ dans des conditions par ailleurs identiques à celle de l'exemple 3, sont utilisés comme support pour des mesures d'angle de contact d'une goutte d'eau.

Les résultats sont rassemblés dans le tableau ci-dessous :

| Tgreffage (°C) | -3 | 12 |
|---|---|---|
| θeau(°) | 110 | 95 |

Le revêtement réalisé à -3°C, soit à une température inférieure à Tc (Tc=2°C, voir exemple 3) est le plus hydrophobe et présente un caractère anti-givre marqué.

## EXEMPLE 6

Deux lames de verre greffées, l'une à 5°C, l'autre à 20°C, par $C_8F_{17}(CH_2)_2S(CH_2)_2Si(OMe)_3$ dans les conditions de l'exemple 2, sont utilisées comme support pour des mesures d'angle de contact d'une goutte d'eau.

Les résultats sont rassemblés dans le tableau ci-dessous:

| Tgreffage (°C) | 5 | 20 |
|---|---|---|
| θeau(°) | 115 | 84 |

Le revêtement réalisé à 5°C, soit à une température inférieure à Tc (Tc=8°C, voir exemple 2) est le plus hydrophobe et présente un caractère anti-givre marqué.

## EXEMPLE 7

On procède comme à l'exemple 3 avec le silane $C_{10}F_{21}$ $(CH_2)_2$-$SiCl_3$ dont la température critique est d'environ 10°C. Les résultats sont rassemblés dans le tableau suivant:

| Tgreffage (°C) | 5 | 15 | ambiante |
|---|---|---|---|
| $\gamma_c$ (mN/m) | 6 | 12 | 12 |

## Revendications

1. Procédé de silanisation de surfaces hydratées de solides par une solution organique d'un organosilane de formule :

$$R^1$$
/
$$CF_3(CF_2)_a\text{-}(CH_2)_b\text{-}Q\text{-}CH_2\text{-}CH_2\text{-}Si\text{-}R^3$$
\
$$R^2$$

où $R^1$, $R^2$, et $R^3$ sont identiques ou différents et représentent chacun un atome d'halogène ou un radical alcoxy comportant un à trois atomes de carbone ou un radical alkyle contenant un ou deux atomes de carbone, l'un au moins des groupements $R^1$, $R^2$, et $R^3$ étant un atome d'halogène ou un radical alcoxy,
a est un nombre allant de 1 à 10,
b est un nombre allant de 0 à 2, et
Q est une liaison directe ou un groupe de liaison bivalent,
caractérisé en ce que ledit procédé est réalisé à une température inférieure ou égale à la température critique $T_c$ dudit organosilane.

2. Procédé selon la revendication 1 caractérisé en ce que $R^1$, $R^2$, et $R^3$ représentent chacun un atome de chlore, un radical méthoxy ou éthoxy, ou un radical alkyle contenant un ou deux atomes de carbone, l'un au moins des groupements $R^1$, $R^2$, et $R^3$ étant un atome de chlore ou un radical méthoxy ou éthoxy,
a est un nombre allant de 5 à 9,

b est égal à 0 ou 2, et
Q représente un groupe éther, ester, thioéther ou une liaison directe.

**3.** Procédé selon la revendication 1 ou 2, caractérisé en ce que l'organosilane est en concentration entre $1.10^{-2}$ et $1.10^{-4}$ mole/litre en solution dans un système solvant organique

**4.** Procédé selon la revendication 3 caractérisé en ce que le système solvant organique comprend au moins 5% en volume d'au moins un solvant organique polaire et au moins 70% en volume d'au moins un solvant hydrocarboné non polaire.

**5.** Procédé selon la revendication 4 caractérisé en ce que l'un au moins des solvants hydrocarbonés non polaire est du type n-alcane

**6.** Procédé selon l'une des revendications 4 ou 5 caractérisé en ce que l'un au moins des solvants polaires est un solvant chloré.

**7.** Solide constitué d'un substrat revêtu d'une monocouche composée de groupements organosiliciés de formule :

$$CF_3(CF_2)_a\text{-}(CH_2)_b\text{-}Q\text{-}CH_2\text{-}CH_2\text{-}\overset{|}{\underset{|}{Si}}\text{-}$$

a étant un nombre allant de 1 à 10,
b étant un nombre allant de 0 à 2,
Q étant une liaison directe ou un groupe de liaison bivalent
les valences restantes du silicium étant liées à des radicaux alkyle contenant un ou deux atomes de carbone, ou à des groupements OH ou à d'autres groupements organosiliciés identiques par l'intermédiaire d'un atome d'oxygène, l'une au moins de ces valences étant liée au substrat par l'intermédiaire d'un atome d'oxygène, caractérisé en ce que la tension critique de surface est inférieure à 12 mN/m

**8.** Solide selon la revendication 7 caractérisé en ce que a est un nombre allant de 5 à 9, b est égal à 0 ou 2, et Q représente un groupe éther, un atome de soufre ou une liaison directe.

**9.** Solide selon la revendication 7 ou 8, caractérisé en ce que le substrat est en métal, de préférence en aluminium

**10.** Solide selon la revendication 7 ou 8, caractérisé en ce que le substrat est en métalloïde, de préférence en silicium oxydé

**11.** Solide selon la revendication 7 ou 8, caractérisé en ce que le substrat est en céramique, de préférence de type oxyde

**12.** Solide selon la revendication 7 ou 8, caractérisé en ce que le substrat est en verre.

Office européen des brevets

# RAPPORT DE RECHERCHE EUROPEENNE

Numero de la demande
EP 94 40 0006

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | EP-A-0 499 977 (MATSUSHITA ELECTRIC INDUSTRIAL CO. LTD)<br>* le document en entier *<br>--- | 1-12 | B05D1/18<br>C09D183/08 |
| X | EP-A-0 474 228 (MATSUSHITA ELECTRIC INDUSTRIAL CO. LTD)<br>* le document en entier *<br>--- | 1-10 | |
| X | EP-A-0 484 746 (MATSUSHITA ELECTRIC INDUSTRIAL CO. LTD)<br>* le document en entier *<br>--- | 1-9,11 | |
| X | EP-A-0 492 545 (MATSUSHITA ELECTRIC INDUSTRIAL CO. LTD)<br>* le document en entier *<br>--- | 1-8,10, 12 | |
| X | EP-A-0 497 204 (MATSUSHITA ELECTRIC INDUSTRIAL CO. LTD)<br>* le document en entier *<br>--- | 1-9,11 | |
| X | EP-A-0 491 251 (MATSUSHITA ELECTRIC INDUSTRIAL CO. LTD)<br>* le document en entier *<br>--- | 1-9,11, 12 | **DOMAINES TECHNIQUES RECHERCHES (Int.Cl.5)**<br>B05D |
| X | EP-A-0 501 298 (MATSUSHITA ELECTRIC INDUSTRIAL CO. LTD)<br>* le document en entier *<br>--- | 1-8,10, 11 | |
| X | EP-A-0 511 548 (MATSUSHITA ELECTRIC INDUSTRIAL CO. LTD)<br>* le document en entier *<br>--- | 1-9,11, 12 | |
| X | EP-A-0 482 613 (MATSUSHITA ELECTRIC INDUSTRIAL CO. LTD)<br>* le document en entier *<br>--- | 1-12 | |
| P,X | EP-A-0 547 550 (MATSUSHITA ELECTRIC INDUSTRIAL CO. LTD)<br>---<br>-/-- | 1-9,11, 12 | |

Le présent rapport a été établi pour toutes les revendications

| Lieu de la recherche | Date d'achèvement de la recherche | Examinateur |
|---|---|---|
| LA HAYE | 3 Mai 1994 | Brothier, J-A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen des brevets

# RAPPORT DE RECHERCHE EUROPEENNE

Numero de la demande
EP 94 40 0006

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| P,X | EP-A-0 525 598 (MATSUSHITA ELECTRIC INDUSTRIAL CO. LTD)<br>--- | 1-9,11, 12 | |
| A | EP-A-0 282 188 (MATSUSHITA ELECTRIC INDUSTRIAL CO. LTD)<br>* le document en entier *<br>----- | 10 | |
| | | | DOMAINES TECHNIQUES RECHERCHES (Int.Cl.5) |

Le présent rapport a été établi pour toutes les revendications

| Lieu de la recherche | Date d'achèvement de la recherche | Examinateur |
|---|---|---|
| LA HAYE | 3 Mai 1994 | Brothier, J-A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)